# EUROPÄISCHE PATENTSCHRIFT

(11) **EP 1 288 617 B1**
(45) Veröffentlichungstag und Bekanntmachung des Hinweises auf die Patenterteilung: **16.11.2005**
(21) Anmeldenummer: 02017433.0
(22) Anmeldetag: 03.08.2002
(51) Int. Cl.: G01C 21/26

(54) **Menüaktualisierung von Telematikdiensten in einem Fahrzeug**
Menu updating for telematic services in a motor vehicle
Mise à jour de menu de services de télématique dans un véhicule

(30) Priorität: 24.08.2001 DE 10141625
(43) Veröffentlichungstag der Anmeldung: 05.03.2003
(73) Patentinhaber: DaimlerChrysler AG, 70567 Stuttgart (DE)
(72) Erfinder: Noghero, Gerd, 89081 Ulm (DE); Raithel, Mathias, 71120 Grafenau (DE)

(56) Entgegenhaltungen:
- WO-A-01/22249
- US-A- 6 167 255

## Beschreibung

Die Erfindung betrifft ein Verfahren zur Menüaktualisierung und Nutzung von Telematikdiensten in einem Fahrzeug über eine Dienstleistungszentrale.

Telematikdienste stellen heute sogenannte Mehrwerte für ein Fahrzeug dar. Diese Dienste werden im Fahrzeug über ein Menü angeboten und sind vom Fahrzeug aus aktivierbar. Der Fahrer kann sich über diese Dienste beispielsweise Broschüren an seine Adresse senden lassen oder die nächstliegende Werkstatt oder das nächstliegende Hotel ermitteln lassen. Die Fahrzeughersteller stellen diese Dienste über Dienstleistungszentralen, die mit dem Fahrzeug mittels drahtloser Datenübertragung kommunizieren, zur Verfügung. Da diese Mehrwert-Dienste erst im Entstehen sind und eine Vielzahl von Einsatzmöglichkeiten bereits angedacht sind, ist hier noch eine starke Entwicklung zu erwarten. Diese Dienstleistungen stehen nicht allen Fahrzeugen zur Verfügung. Vielmehr muss sichergestellt sein, dass die Dienste in Fahrzeugen nach bestimmten Kriterien wie beispielsweise Hersteller, Fahrzeug, Besitzer angeboten werden.

Aus der DE 196 40 735 A1 ist ein Telematikgerät für ein Kraftfahrzeug bekannt, mit dessen Hilfe sowohl allgemein betreffende Informationen via des Autoradios, als auch individuelle Informationen über das GSM-Modul empfangen werden. Des weiteren können mittels des offenbarten Telematikgeräts beispielsweise Daten über die Fahrzeugposition, ein Zielwunsch oder ein Notruf an die Zentrale gesendet werden. Die Zentrale berechnet einen oder mehrere Zielrouten und sendet diese an das Telematikgerät zurück. Im Falle eines Unfalls oder einer Autopanne wird ein entsprechender Notruf gesendet und Hilfe herbeigeholt. Als weitere Telematikdienste mittels des Telematikgeräts sind ein erweiterter Diebstahlschutz für das Kraftfahrzeug, Hotelbuchungen etc. vorgesehen.

Aus der DE 196 25 002 A1 ist ein Fahrzeugkommunikationssystem bekannt, welches einen Zentralrechner zur Durchführung von Telematik-Applikationen, Geräteeinheiten zum Verarbeiten von zu den Telematik-Applikationen gehörigen Daten und einem oder mehreren Datenübertragungskanälen mit zugehörigen Schnittestellen aufweist. Die Geräteeinheiten sind über die Schnittstellen mit dem zentralen Fahrzeugrechner verbindbar. Dabei sind die Geräteeinheiten den verschiedenen Telematik-Applikationen flexibel steuerbar zugeordnet, wobei eine adaptive Applikationssteuerung vorgesehen ist, die zur Durchführung einer jeweiligen Applikation die jeweils erforderlichen Geräteeinheiten funktionsbezogen auswählt.

In der EP 891 111 A2 ist ein Verfahren zur Konfigurierung, insbesondere Freischaltung, eines Endgeräts für die Nutzung von Diensten einer Dienstleistungszentrale offenbart, wobei zur Aktivierung der Dienste im Endgerät bestimmte von der Dienstleistungszentrale vorgegebene Informationen eingegeben werden müssen. Bei diesem Verfahren werden keine Aktualisierungen der Menüeinträge in dem Endgerät vorgenommen.

In der EP 911 607 A2 wird ein Verfahren und eine Vorrichtung zur Aktualisierung des Menüs eines mobilen Endgeräts offenbart. Bei diesem Verfahren muss das mobile Endgerät sich erst mit der Zentrale in Verbindung setzen, um die Versionsinformation abzufragen. Erst nach Vergleich der Versionsinformation von der Zentrale mit der des mobilen Endgeräts kann eine Aktualisierung erfolgen. Es werden nur Menüs mit unterschiedlichen Versionen aktualisiert. Bei diesem Verfahren muss der Aktualisierungsvorgang durch mehrere Kommunikationsschritte zwischen Zentrale und Endgerät eingeleitet werden, was zusätzlichen Datenverkehr bedeutet. Zudem muss das Endgerät zyklisch bei der Zentrale anfragen, ob eine Aktualisierung erforderlich ist.

Ein Verfahren gemäß dem Oberbegriff des Anspruchs 1 ist aus der US 6 167 255 bekannt.

Es ist nun die Aufgabe der vorliegenden Erfindung, das beschriebene Verfahren derart weiterzubilden, dass bei Aktualisierung und Nutzung von Telematikdiensten die Datenübertragung zwischen der Dienstleistungszentrale und dem Fahrzeug minimiert wird.

Diese Aufgabe wird erfindungsgemäß durch die Merkmale des Anspruchs 1 gelöst. Danach wird unter anderen der Dienstleistungszentrale Zugriff auf ein Dokumentationssystem gegeben, in dem mittels der Fahrzeug-Identifikationskennung Informationen über die Ausstattung der Fahrzeuge abgelegt sind. Die von einem Fahrzeug aus bedienbaren Telematikdienste für das Fahrzeug werden über die Dienstleistungszentrale mittels der Informationen im Dokumentationssystem fahrzeugbezogen aktuell zusammengestellt.

Die Fahrzeug-Identifikationskennung entspricht einer eindeutigen Kennung des Fahrzeugs. Im Allgemeinen wird die Fahrgestellnummer des Fahrzeugs verwendet. Es kann aber auch das Kennzeichen des Fahrzeugs oder die Identität des Fahrzeughalters sein.

Mit Hilfe des Verfahrens kann die Dienstleistungszentrale feststellen, ob und welche Endgeräte in den jeweiligen Fahrzeugen aktualisiert werden müssen, da sich die Dienstleistungszentrale diese Information mittels des Dokumentationssystems zusammenstellen kann. Zudem sind Menüs mit unterschiedlichen Menüeinträgen möglich, da diese ja individuell für jedes Fahrzeug zusammengestellt werden können.

Bei einer Weiterbildung des erfindungsgemäßen Verfahrens wird das Menü bestehend aus den Informationen für die einzelnen Telematikdienste von der externen Dienstleistungszentrale an das Fahrzeug übertragen. Das Menü für Telematikdienste in dem Fahrzeug wird mittels des Informationssystems aktualisiert, wobei die kompletten bisher vorhandenen Telematikdienst-Einträge durch die von der Dienstleistungszentrale zusammengestellten Telematikdienst-Einträge ersetzt werden.

Damit entfällt der Datenverkehr zur Feststellung, ob der Eintrag für den Telematikdienst aktualisiert werden muss oder nicht. Das Verfahren stellt ebenfalls sicher, dass das Telematikdienst-Menü im Fahrzeug ausschließlich von der Dienstleistungszentrale gesteuert wird.

Das erfindungsgemäße Verfahren lässt sich vorteilhaft weiterbilden, so dass die von der Dienstleistungszentrale an das Fahrzeug zu übertragenden Daten minimiert werden, indem die Informationen für einen Telematikdienst auf das Wesentliche beschränkt werden. So besteht die Information für einen Telematikdienst nur aus einem beschreibenden Text und Identifizierungscode. Da man sich auf nur ein Untermenü beschränkt, ist keine zusätzliche Information zur Menüpositionierung erforderlich.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform des erfindungsgemäßen Verfahrens und eine entsprechende Vorrichtung dargestellt. Es zeigen jeweils in schematischer Darstellung,
- Fig. 1: eine Vorrichtung zur Durchführung des erfindungsgemäßen Verfahrens und
- Fig. 2: ein Menü, welches bei der Anwendung des erfindungsgemäßen Verfahrens im Fahrzeug angezeigt wird.

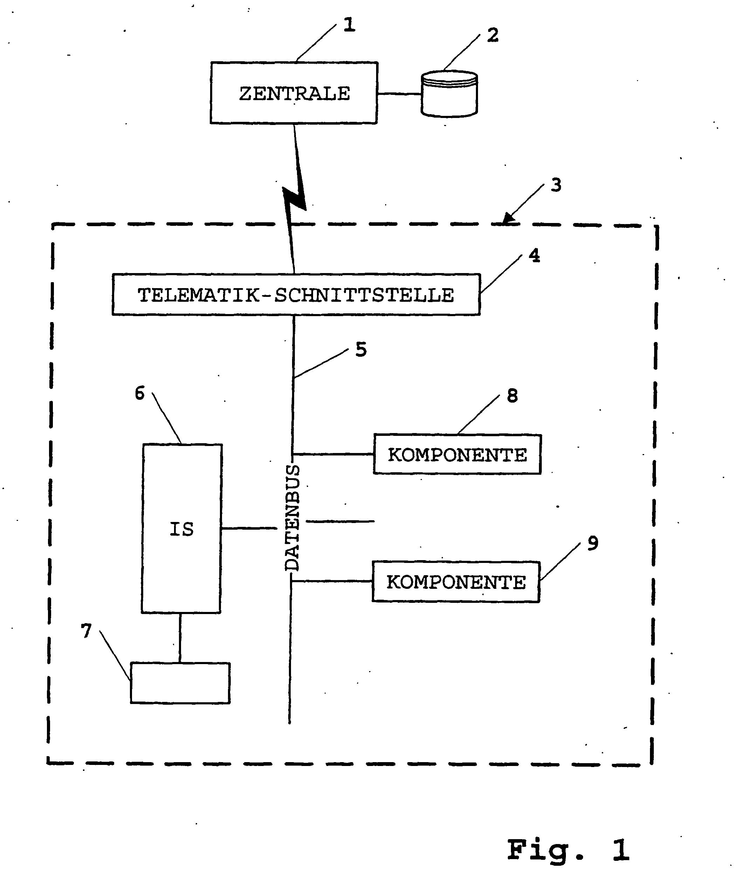

Die erfindungsgemäße Vorrichtung ist in Fig. 1 dargestellt. Die Dienstleistungszentrale 1 ist mit einem Dokumentationssystem 2 verbunden. In dem Dokumentationssystem 2 sind aus Gründen der Produkthaftung und Wartung alle elektronisch verfügbaren Daten über die Fahrzeuge 3, insbesondere deren Ausstattung, Fahrzeugtyp und Fahrzeughalter, abgelegt. Die Zuordnung der Daten zum Fahrzeug 3 erfolgt über die Fahrgestellnummer, die damit der Fahrzeug-Identifikationskennung entspricht.

Die Dienstleistungszentrale 1 bietet verschiedene Telematikdienste an. Jedoch sollen nicht allen Fahrzeugen alle Telematikdienste zur Verfügung gestellt werden. Beispielsweise werden für höherwertige Fahrzeuge aufgrund des Kaufpreises eine größere Anzahl von Telematikdiensten bereit gestellt, während für Fahrzeuge mit geringwertiger Ausstattung keine oder nur sehr wenige Dienste angeboten werden.

Aus diesem Grunde stellt die Dienstleistungszentrale 1 mittels der im Dokumentationssystem 2 vorhandenen Informationen die für ein Fahrzeug 3 aktivierbaren Telematikdienste individuell fahrzeugbezogen in einem Menü zusammen. Die Dienstleistungszentrale 1 sendet diese Daten für das Telematikdienst-Menü bestehend aus den Informationen zu den einzelnen für das Fahrzeug bestimmten Telematikdiensten an das Fahrzeug 3. Das Fahrzeug 3 ist durch seine Fahrgestellnummer eindeutig identifiziert, so dass die Dienstleistungszentrale 1 mittels der im Dokumentationssystem 2 für das Fahrzeug 3 abgelegten Informationen, wie beispielsweise Telefonnummer, eine Verbindung herstellen kann.

Die Dienstleistungszentrale 1 kann diesen Vorgang jederzeit wiederholen, wenn die Dienstleistungszentrale 1 neue oder aktualisierte Telematikdienste zur Verfügung stellt. Insbesondere wird immer das komplette Menü, also alle für das Fahrzeug 3 zur Verfügung gestellten Telematikdienste, an das Fahrzeug 3 gesendet, um unnötigen Datenverkehr zwischen Dienstleistungszentrale 1 und Fahrzeug 3 zu vermeiden. Der Datenverkehr zur Feststellung, ob der Eintrag für den Telematikdienst aktualisiert werden muss oder nicht, entfällt damit. Zudem wird durch das Verfahren sichergestellt, dass das Telematikdienst-Menü im Fahrzeug 3 ausschließlich von der Dienstleistungszentrale 1 gesteuert wird.

Die Dienstleistungszentrale 1 tauscht bevorzugt Daten über eine drahtlose Übertragungseinrichtung mittels Kommunikationsschnittstelle 4 mit dem Fahrzeug 3 aus. Die Kommunikationsschnittstelle 4 ist über ein Datenbussystem 5 mit dem Informationssystem 6 und weiteren Komponenten 8, 9 verbunden. Das Informationssystem 6 verfügt über eine Ein-/Ausgabeeinheit 7 zur Darstellung und Aktivierung von Menüs bzw. Menüeinträgen.

Die von der Dienstleistungszentrale 1 gesendeten Informationen für die Telematikdienste bestehen aus einem beschreibenden Text, beispielsweise "Broschüren", und einem Identifizierungscode für diesen Dienst, der von der Dienstleistungszentrale vergeben wird. Der Identifizierungscode besteht im Allgemeinen aus einer alphanumerischen Kennung und dient der Unterscheidung der von der Dienstleistungszentrale angebotenen Dienste.

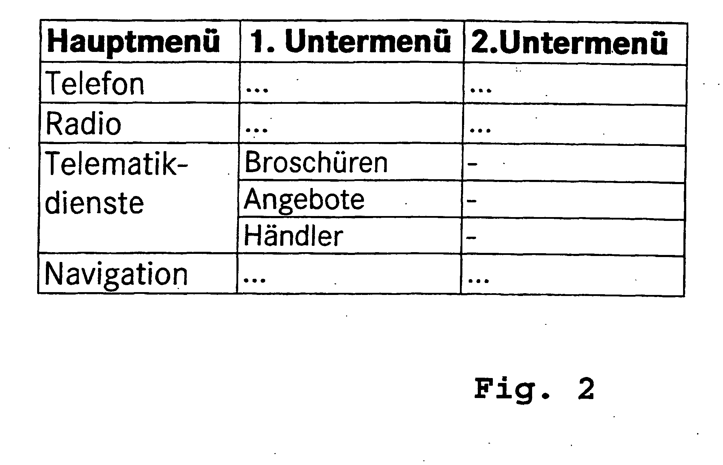

Das Informationssystem 6 gliedert diese Informationen in den Menüpunkt "Telematikdienste" ein. In Fig.2 ist eine schematische Darstellung eines Menüs mit mehreren hierarchischen Ebenen abgebildet, wie sie mittels der Ein-/Ausgabeeinheit 7 des Informationssystems 6 angezeigt wird. Im Hauptmenü kann der Menüpunkt "Telematikdienste" ausgewählt werden, der nur aus einem Untermenü besteht. In diesem Untermenü werden die Informationen zu den gesendeten Telematikdiensten, beispielsweise "Broschüren", "Angebote" und "Händler" abgelegt. Diese Telematikdienste sind über die Ein-/Ausgabeeinheit 7 aktivierbar. Der Identifizierungscode des Telematikdienstes ist im Informationssystem 6 abgelegt. Er wird nicht im Menü angezeigt, da dieser nicht beschreibend ist.

Die von der Dienstleistungszentrale 1 an das Fahrzeug 3 zu übertragenden Daten werden minimiert, indem die Informationen für einen Telematikdienst auf das Wesentliche beschränkt werden. So besteht die Information für einen Telematikdienst nur aus einem beschreibenden Text und einen Identifizierungscode. Da man sich auf nur ein Untermenü beschränkt ist keine zusätzliche Information zur Menüpositionierung erforderlich.

Wird nun ein Telematikdienst über einen Insassen des Fahrzeugs 3 mittels der Ein-/Ausgabeeinheit 7 des Informationssystems 6 aktiviert, sendet das Informationssystem 6 mittels der Kommunikationsschnittstelle 4 den Identifizierungscode für den ausgewählten Telematikdienst versehen mit der Fahrgestellnummer an die Dienstleistungszentrale 1. Diese aktiviert den ausgewählten Dienst für das Fahrzeug 3 mit der entsprechenden Fahrgestellnummer. Sollte die Dienstleistungszentrale 1 noch weitere Informationen zur Ausführung des Dienstes benötigen, wie beispielsweise die Adresse des Fahrzeughalters, kann sie diese Information mittels der Fahrgestellnummer über das Dokumentationssystem 2 ermitteln. Ein Telematikdienst wie "Broschüren", der bei Aktivierung die neuesten Broschüren über das Fahrzeug 3 an die Adresse des Fahrzeughalters sendet, ist mit minimalem Datenverkehr zwischen Fahrzeug 3 und Dienstleistungszentrale 1 möglich.

## Patentansprüche

1. Verfahren zur Menüaktualisierung und Nutzung von Telematikdiensten in einem Fahrzeug über eine externe Dienstleistungszentrale (1), wobei
- Daten zwischen dem Fahrzeug (3) und der Dienstleistungszentrale (1) ausgetauscht werden,
- die Dienstleistungszentrale (1) Telematikdienste zur Verfügung stellt,
- ein Menü für Telematikdienste mittels eines Informationssystems (6) des Fahrzeugs (3) zur Verfügung gestellt wird und
- die Telematikdienste über das Menü des Informationssystems (6) auswählbar sind,
- der Dienstleistungszentrale (1) Zugriff auf ein Dokumentationssystem (2) gegeben wird, in dem mittels der Fahrzeug-Identifikationskennung Informationen über die Ausstattung der Fahrzeuge (3) abgelegt sind und
- die von einem Fahrzeug (3) aus bedienbaren Telematikdienste für das Fahrzeug (3) über die Dienstleistungszentrale (1) mittels der Informationen im Dokumentationssystem (2) fahrzeugbezogen aktuell zusammengestellt werden,
**dadurch gekennzeichnet,**
**dass** die von dem Fahrzeug (3) aus bedienbaren Telematikdienste für das Fahrzeug (3) über die Dienstleistungszentrale (1) ausschließlich durch die Dienstleistungszentrale (1) gesteuert aktualisiert werden, wenn neue oder aktualisierte und fahrzeugbezogene Telematikdienste vorliegen.

2. Verfahren nach Anspruch 1,
**dadurch gekennzeichnet ,**
**dass**
- das Menü bestehend aus den Informationen für die einzelnen Telematikdienste von der externen Dienstleistungszentrale (1) an das Fahrzeug (3) übertragen wird und
- das Menü für Telematikdienste in dem Fahrzeug (3) mittels des Informationssystems (6) aktualisiert wird, wobei die kompletten bisher vorhandenen Telematikdienst-Einträge durch die von der Dienstleistungszentrale (1) zusammengestellten Telematikdienst-Einträge ersetzt werden.

3. Verfahren nach Anspruch 1 oder 2,
**dadurch gekennzeichnet, dass**
bei Aktivierung eines Telematikdienstes der Identifizierungscode des Telematikdienstes zusammen mit der Fahrzeug-Identifikationsnummer an die Dienstleistungszentrale (1) gesendet wird, damit die Dienstleistungszentrale (1) den Empfänger der Dienstleistung feststellen kann.

4. Verfahren nach Anspruch 1 oder 2,
**dadurch gekennzeichnet, dass**
- das Menü für Telematikdienste in einem Fahrzeug (3) nur aus einer Hierarchiestufe besteht und
- die auf das Fahrzeug (3) zu übertragenden Informationen für die einzelnen Telematikdienste aus dem Identifizierungscode sowie einen den Telematikdienst beschreibenden Text zusammengesetzt sind.

5. Verfahren nach Anspruch 1 oder 2,
**dadurch gekennzeichnet, dass**
die Dienstleistungszentrale (1) mittels des Informationssystems (6) steuern kann, ob der Fahrer eine Information über die erfolgte Aktualisierung des Telematikdienst-Menüs erhält.

## Claims

1. Method for updating menus and using telematic services in a vehicle by means of an external service provider centre (1),
- data being exchanged between the vehicle (3) and the service provider centre (1),
- the service provider centre (1) making available telematic services,
- a menu for telematic services being made available by means of an information system (6) of the vehicle (3), and
- it being possible to select the telematic services by means of the menu of the information system (6),
- the service provider centre (1) being provided with access to a documentation system (2) in which information about the equipment level of the vehicles (3) is stored by means of the vehicle identifier, and
- the telematic services for the vehicle (3) which can be operated from a vehicle (3) are compiled in an updated-vehicle related fashion by means of the service provider centre (1) using the information in the documentation system (2),
**characterized in that** the telematic services for the vehicle (3) which can be operated from the vehicle (3) are updated by means of the service provider centre (1) exclusively under the control of the service provider centre (1) if new or updated and vehicle-related telematic services are present.

2. Method according to Claim 1, **characterized in that**
- the menu comprising the information for the individual telematic services is transmitted from the external service provider centre (1) to the vehicle (3), and
- the menu for telematic services is updated in the vehicle (3) by means of the information system (6), the entire telematic service entries which have previously been present being replaced by the telematic service entries which have been compiled by the service provider centre (1).

3. Method according to Claim 1 or 2, **characterized in that** when a telematic service is activated the identification code of the telematic service is transmitted together with the vehicle identification number to the service provider centre (1) so that the service provider centre (1) can detect the receiver of the service provision.

4. Method according to Claim 1 or 2, **characterized in that**
- the menu for telematic services in a vehicle (3) is composed of only one hierarchy level, and
- the information for the individual telematic services which is to be transmitted to the vehicle (3) is composed of the identification code and a text which describes the telematic service.

5. Method according to Claim 1 or 2, **characterized in that** the service provider centre (1) can control, by means of the information system (6), whether the driver receives information about the updating of the telematic service menu which has taken place.

## Revendications

1. Procédé pour la mise à jour de menus et pour l'utilisation de services de télématique dans un véhicule par l'intermédiaire d'une centrale de fourniture de services (1), avec
- échange de données entre le véhicule (3) et la centrale de fourniture de services (1),
- mise à disposition de services de télématique par la centrale de fourniture de services (1),
- mise à disposition d'un menu pour les services de télématique au moyen d'un système d'information (6) du véhicule (3), et
- possibilité de sélectionner les services de télématique par l'intermédiaire du menu du système d'information (6),
- fourniture à la centrale de fourniture de services (1) d'un accès à un système de documentation (2) dans lequel sont déposées des informations sur l'équipement des véhicules (3) au moyen de la reconnaissance de l'indentification du véhicule, et
- les services de télématique pour le véhicule (3) utilisables à partir d'un véhicule (3), regroupés de manière actualisée par l'intermédiaire de la centrale de fourniture de services (1) au moyen des informations concernant le véhicule contenues dans le système de documentation (2),
**caractérisé en ce que** les services de télématique pour le véhicule (3) utilisables à partir du véhicule (3), sont exclusivement actualisés par l'intermédiaire de la centrale de fourniture de services (1) sous le contrôle de la centrale de fourniture de services (1), lorsqu'on dispose de services de télématique nouveaux ou actualisés et concernant le véhicule.

2. Procédé selon la revendication 1, **caractérisé en ce que**
- on transmet le menu constitué par les informations pour les services de télématique individuels à partir de la centrale de fourniture de services (1) externe vers le véhicule (3) et
- on actualise le menu pour les services de télématique dans le véhicule (3) au moyen du système d'information (6), en remplaçant la totalité des entrées du service de télématique disponibles jusqu'à présent par les entrées du service de télématique regroupées par la centrale de fourniture de services (1).

3. Procédé selon la revendication 1 ou 2, **caractérisé en ce que** lors de l'activation d'un service de télématique, on envoie le code d'identification du service de télématique en même temps que le numéro d'identification du véhicule vers la centrale de fourniture de services (1) pour que la centrale de fourniture de services (1) puisse déceler le récepteur de la fourniture de services.

4. Procédé selon la revendication 1 ou 2, **caractérisé en ce que**
- le menu pour les services de télématique dans un véhicule (3) n'est constitué que d'un niveau hiérarchique et
- les informations à transmettre au véhicule (3) pour les services de télématique individuels sont constituées du code d'identification ainsi que d'un texte décrivant le service de télématique.

5. Procédé selon la revendication 1 ou 2, **caractérisé en ce que** la centrale de fourniture de services (1) est capable, au moyen du système d'information (6), de contrôler si le conducteur reçoit une information sur la réussite de l'actualisation du menu du service de télématique.
